# EUROPEAN PATENT APPLICATION

(11) **EP 3 876 309 A1**
(43) Date of publication of application: **08.09.2021**
(21) Application number: 19880440.3
(22) Date of filing: 29.10.2019
(51) Int. Cl.: H01M 4/13, H01M 10/052, H01M 10/0568, H01M 10/0569, H01M 10/0585, H01M 2/02, H01M 2/04

(54) **COIN-SHAPED SECONDARY BATTERY**

(30) Priority: 30.10.2018 JP 2018204398
(71) Applicant: NGK Insulators, Ltd., Nagoya-shi, Aichi 467-8530 (JP)
(72) Inventor: YURA, Yukinobu, Nagoya-shi, Aichi 467-8530 (JP); MAEDA, Kazuki, Nagoya-shi, Aichi 467-8530 (JP); URAKAWA, Akira, Nagoya-shi, Aichi 467-8530 (JP)
(74) Representative: Müller-Boré & Partner Patentanwälte PartG mbB
(86) International application number: PCT/JP2019/042328
(87) International publication number: WO 2020/090802

(57) **Abstract**

A coin-type secondary cell (1) for soldering by reflow method includes a porous positive electrode (2), a porous negative electrode (3), a porous separator (41) provided between the positive electrode (2) and the negative electrode (3), an electrolytic solution (42) with which the positive electrode (2), the negative electrode (3), and the separator (41) are impregnated, and a cell case (5) having an enclosed space in which the positive electrode (2), the negative electrode (3), the separator (41), and the electrolytic solution (42) are housed. A value obtained by dividing the amount of the electrolytic solution (42) by the sum of the amounts of voids in the positive electrode (2), the negative electrode (3), and the separator (41) ranges from 1.025 to 2.4. Accordingly, it is possible to achieve the coin-type secondary cell (1) with high performance and reduced deterioration of performance caused by reflow soldering.

## Description

### Technical Field

The present invention relates to a coin-type secondary cell for soldering by reflow method.

### Cross-Reference to Related Application

This application claims priority benefit of Japanese Patent Application No. 2018-204398 filed in the Japan Patent Office on October 30, 2018, the entire disclosure of which is incorporated herein by reference.

### Background Art

Various coin-type secondary cells have conventionally been used. For example, Japanese Patent Publication No. 4392189 (Document 1) discloses a coin-type secondary cell for soldering by reflow method, in which a lithium-containing manganese oxide is used as a positive active material. In this coin-type secondary cell, the concentration of lithium salt contained in an electrolytic solution is set in the range of 1.5 to 2.5 mol/l in order to suppress reactions of the electrolytic solution and the lithium-containing manganese oxide induced by reflow soldering and to achieve favorable reflow heat resistance.

Japanese Patent Publication No. 5587052 (Document 2) discloses a positive electrode of a lithium secondary cell, in which a lithium composite oxide sintered plate with a thickness greater than or equal to 30 µm, a porosity of 3 to 30%, and an open porosity greater than or equal to 70% is used as a positive active material layer of the positive electrode. International Publication No. WO/2017/146088 (Document 3) discloses a lithium secondary cell including a solid electrolyte, in which an oriented sintered plate is used as a positive electrode. The oriented sintered plate includes a plurality of primary particles of a lithium composite oxide such as lithium cobaltate (LiCoO₂), and the primary particles are oriented to the plate surface of the positive electrode at an average orientation angle greater than 0° and less than or equal to 30°. Japanese Patent Application Laid-Open No. 2015-185337 (Document 4) discloses an all solid-state cell that uses a lithium titanate (Li₄Ti₅O₁₂) sintered body as an electrode.

As described previously, according to Document 1, reactions of the electrolytic solution and the positive active material induced by heat during reflow soldering can be suppressed by adjusting the concentration of lithium salt contained in the electrolytic solution within a predetermined range. However, in the coin-type secondary cell for soldering by reflow method, deterioration of performance due to reflow soldering may be caused by other factors.

### Summary of Invention

The present invention is intended for a coin-type secondary cell for soldering by reflow method, and it is an object of the present invention to achieve a coin-type secondary cell with high performance and reduced deterioration of performance induced by reflow soldering.

A coin-type secondary cell according to the present invention includes a porous positive electrode, a porous negative electrode, a porous separator provided between the positive electrode and the negative electrode, an electrolytic solution with which the positive electrode, the negative electrode, and the separator are impregnated, and a cell case having an enclosed space in which the positive electrode, the negative electrode, the separator, and the electrolytic solution are housed. A value obtained by dividing an amount of the electrolytic solution by a sum of amounts of voids in the positive electrode, the negative electrode, and the separator ranges from 1.025 to 2.4.

According to the present invention, it is possible to achieve a coin-type secondary cell with high performance and reduced deterioration of performance induced by reflow soldering.

In one preferable embodiment of the present invention, a value obtained by dividing a volume of the cell case by the amount of the electrolytic solution ranges from 1.6 to 3.2.

In another preferable embodiment of the present invention, the coin-type secondary cell has an energy density of 35 to 200 mWh/cm³ before reflow soldering.

In another preferable embodiment of the present invention, the positive electrode and the negative electrode are sintered bodies.

In another preferable embodiment of the present invention, the positive electrode has a porosity of 20 to 60% and a mean pore diameter of 0.1 to 10.0 µm.

In another preferable embodiment of the present invention, the negative electrode has a porosity of 20 to 60% and a mean pore diameter of 0.08 to 5.0 µm.

In another preferable embodiment of the present invention, the coin-type secondary cell is a lithium secondary cell, and the electrolytic solution is a solution that contains lithium borofluoride in a nonaqueous solvent composed of at least one kind selected from the group consisting of γ-butyrolactone, ethylene carbonate, and propylene carbonate.

In another preferable embodiment of the present invention, the coin-type secondary cell has a thickness of 0.7 to 1.6 mm and a diameter of 10 to 20 mm.

In another preferable embodiment of the present invention, the coin-type secondary cell after reflow soldering has a capacity higher than or equal to 65% of the capacity of the coin-type secondary cell before the reflow soldering.

These and other objects, features, aspects and advantages of the present invention will become more apparent from the following detailed description of the present invention when taken in conjunction with the accompanying drawings.

### Brief Description of Drawings

Fig. 1 is a diagram illustrating a configuration of a coin-type secondary cell;
Fig. 2 is a diagram illustrating a sectional SEM image of an oriented positive electrode plate;
Fig. 3 is a diagram illustrating an EBSD image of a section of the oriented positive electrode plate;
Fig. 4 is a diagram illustrating a histogram showing the angular distribution of orientation of primary particles in the EBSD image; and
Fig. 5 is a side view of the circuit board assembly.

### Description of Embodiments

### Coin-Type Secondary Cell

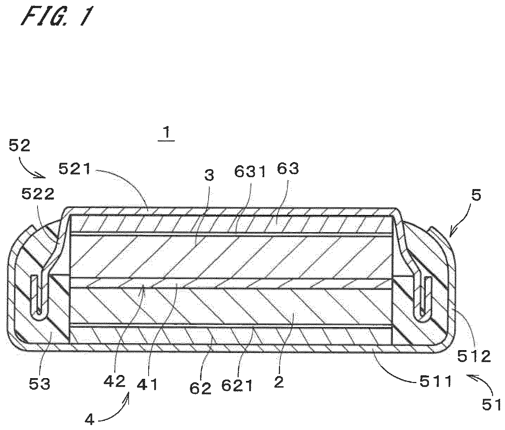

Fig. 1 is a diagram illustrating a configuration of a coin-type secondary cell 1 according to one embodiment of the present invention. The coin-type secondary cell 1 includes a positive electrode 2, a negative electrode 3, an electrolyte layer 4, and a cell case 5. The positive electrode 2 and the negative electrode 3 are porous. The electrolyte layer 4 includes a separator 41 and an electrolytic solution 42. The separator 41 is provided between the positive electrode 2 and the negative electrode 3. The separator 41 is porous and impregnated with the electrolytic solution 42. The positive electrode 2 and the negative electrode 3 are also impregnated with the electrolytic solution 42. The cell case 5 has an enclosed space therein. The positive electrode 2, the negative electrode 3, the electrolyte layer 4 are housed in the enclosed space. In the coin-type secondary cell 1, a value obtained by dividing the amount of the electrolytic solution 42 contained in the cell by a sum of the amounts of voids in the positive electrode 2, the negative electrode 3, and the separator 41 (hereinafter, referred to as an "electrolytic-solution-to-void ratio") ranges from 1.025 to 2.4. Note that the amount of voids in the positive electrode 2 refers to a gross volume of pores (voids) contained in the positive electrode 2. The same applies to the negative electrode 3 and the separator 41. The amount of the electrolytic solution 42 and the amounts of voids in the positive electrode 2, the negative electrode 3, and the separator 41 are expressed in the same unit, e.g., cubic centimeters (cm³).

The coin-type secondary cell 1 is designed for soldering by reflow method and electrically connected to and mounted on a wiring board by reflow soldering. During the reflow soldering, the coin-type secondary cell 1 is heated to a high temperature (e.g., a temperature of 200 to 260°C) for a predetermined amount of time. At this time, coin-type secondary cells according to comparative examples, whose electrolytic-solution-to-void ratios are less than or equal to 1.00, deteriorate in performance. Although the reason why the performance deteriorates due to the reflow soldering remains uncertain, one conceivable cause is that heating during the reflow soldering may cause some of the electrolytic solution, with which the pores in the positive electrode, the negative electrode, and the separator are impregnated, to be vaporized and fail to return by a sufficient amount into the pores of the positive electrode, the negative electrode, and the separator even if the temperature of the coin-type secondary cell drops after completion of the reflow soldering.

In contrast, the coin-type secondary cell 1 whose electrolytic-solution-to-void ratio is higher than or equal to 1.025 can reduce deterioration of performance induced by the reflow soldering. One conceivable reason for this is that the higher electrolytic-solution-to-void ratio than those of coin-type secondary cells according to comparative examples allows the electrolytic solution 42 to readily return into the pores of the positive electrode 2, the negative electrode 3, and the separator 41 after completion of the reflow soldering. For example, the coin-type secondary cell 1 after the reflow soldering has a capacity higher than or equal to 65% (typically, lower than or equal to 100%) of the capacity thereof before the reflow soldering. Preferably, the capacity of the cell after the reflow soldering is 75% or more of the capacity of the cell before the reflow soldering. In order to more reliably suppress deterioration of performance induced by reflow soldering, the coin-type secondary cell 1 preferably has an electrolytic-solution-to-void ratio higher than or equal to 1.05, and more preferably higher than or equal to 1.10.

If the electrolytic-solution-to-void ratio is 2.5 or higher, the coin-type secondary cell deteriorates in performance (e.g., capacity) more significantly than expected, irrespective of application of the reflow soldering. One conceivable cause for this is that an excessive amount of the electrolytic solution may worsen the state of conduction between each of the positive and negative electrodes and the cell case (more specifically, positive and negative electrode cans described later). In contrast, the coin-type secondary cell 1 having an electrolytic-solution-to-void ratio lower than or equal to 2.4 can achieve high performance as expected. In order to more reliably achieve the coin-type secondary cell 1 with high performance, the electrolytic-solution-to-void ratio is preferably lower than or equal to 2.2, and more preferably lower than or equal to 2.0.

In the coin-type secondary cell 1, a value obtained by dividing the volume of the cell case 5 by the amount of the electrolytic solution 42 (hereinafter, referred to as a "cell-case-to-electrolytic-solution ratio") preferably ranges from 1.6 to 3.2. In other words, the volume of the cell case 5 is preferably 1.6 to 3.2 times the amount of the electrolytic solution 42. The volume of the cell case 5 and the amount of the electrolytic solution 42 are expressed in the same unit, e.g., cubic centimeters (cm³). Here, the solid-state members such as the positive electrode 2, the negative electrode 3, and the separator 41 and the electrolytic solution 42 are present in the interior (enclosed space) of the cell case 5. In principle, most of the electrolytic solution 42 is filled in the pores of the positive electrode 2, the negative electrode 3, and the separator 41. Thus, when the cell-case-to-electrolytic-solution ratio is low, there is considered only a small empty space in which neither the solid-state members nor the electrolytic solution 42 are present inside the cell case 5. In this way, the cell-case-to-electrolytic-solution ratio can be regarded as an indicator that indicates the size of the empty space inside the cell case 5. The cell-case-to-electrolytic-solution ratio is more preferably lower than or equal to 3.1, and yet more preferably lower than or equal to 3.0.

The thickness of the coin-type secondary cell 1 (distance between the outside surface of a flat plate portion 511 of the positive electrode can 51 and the outside surface of a flat plate portion 521 of the negative electrode can 52, described later) is in the range of, for example, 0.7 to 1.6 mm. To reduce the thickness of a later-described circuit board assembly that includes the coin-type secondary cell 1 mounted thereon, an upper limit value of the thickness of the coin-type secondary cell 1 is preferably 1.4 mm, and more preferably 1.2 mm. From the viewpoint of ensuring a certain degree of thickness for the positive electrode 2 and the negative electrode 3 and increasing the capacity of the cell, a lower limit value of the thickness of the coin-type secondary cell 1 is preferably 0.8 mm, and more preferably 0.9 mm.

The coin-type secondary cell 1 has a diameter of, for example, 10 to 20 mm (diameter of the flat plate portion 511 of the positive electrode 51, described later). In order to achieve downsizing of the circuit board assembly that includes the coin-type secondary cell 1 mounted thereon, an upper limit value of the diameter of the coin-type secondary cell 1 is preferably 18 mm, and more preferably 16 mm. From the viewpoint of ensuring a certain degree of size for the positive electrode 2 and the negative electrode 3 and increasing the capacity of the cell, a lower limit value of the diameter of the coin-type secondary cell 1 is preferably 10.5 mm, and more preferably 11 mm.

As will be described later, a preferable coin-type secondary cell 1 uses a lithium composite oxide sintered plate as the positive electrode 2 and a titanium-containing sintered plate as the negative electrode 3. This realizes the coin-type lithium secondary cell that has excellent heat resistance to enable soldering by reflow method, that provides high capacity and high output while being low-profile and compact, and that is capable of constant-voltage (CV) charging. The coin-type secondary cell 1 before reflow soldering preferably has an energy density higher than or equal to 35 mWh/cm³. A lower limit value of the energy density is more preferably 40 mWh/cm³, and yet more preferably 50 mWh/cm³. There are no particular limitations on the upper limit value of the energy density of the coin-type secondary cell 1, and the upper limit value may, for example, be 200 mWh/cm³. In the coin-type secondary battery 1 having an energy density within the aforementioned range, components such as the positive electrode 2, the negative electrode 3, and the separator 41 occupy most part of the enclosed space of the cell case 5, and therefore, it can be said that there is almost no empty space described previously.

The positive electrode 2 is, for example, a plate-like sintered body. The fact that a sintered body is used as the positive electrode 2 means that the positive electrode 2 contains neither binders nor conductive assistants. This is because even if a green sheet contains a binder, the binder will be destroyed or burnt down during firing. Using a sintered body as the positive electrode 2 allows the positive electrode 2 to ensure heat resistance during reflow soldering. Besides, deterioration of the positive electrode 2 caused by the electrolytic solution 42 can be moderated as a result of the positive electrode 2 including no binders. As described previously, the positive electrode 2 is porous, i.e., has pores.

A preferable positive electrode 2 is a lithium composite oxide sintered plate. A lithium composite oxide is in particular preferably lithium cobaltate (typically, LiCoO₂; hereinafter abbreviated as "LCO"). Various lithium composite oxide sintered plates or LCO sintered plates are known, and for example, those that are disclosed in Document 2 described above (Japanese Patent Publication No. 5587052) and Document 3 described above (International Publication No. WO/2017/146088) may be used. Although the following description is given of the case where a lithium composite oxide sintered plate is used as the positive electrode 2, the positive electrode 2 may be an electrode of a different type depending on the design of the coin-type secondary cell 1. One example of such a different positive electrode 2 is a powder dispersed-type positive electrode (so-called coating electrode) produced by applying and drying a positive electrode mixture of, for example, a positive active material, a conductive assistant, and a binder.

The aforementioned lithium composite oxide sintered plate is preferably an oriented positive electrode plate that contains a plurality of primary particles of a lithium composite oxide and in which the primary particles are oriented at an average orientation angle greater than 0° and less than or equal to 30° relative to the plate surface of the positive electrode.

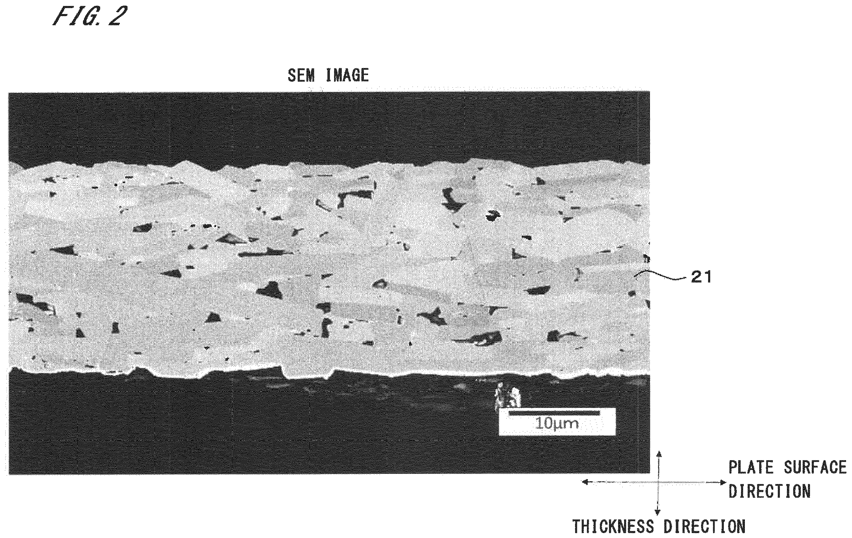

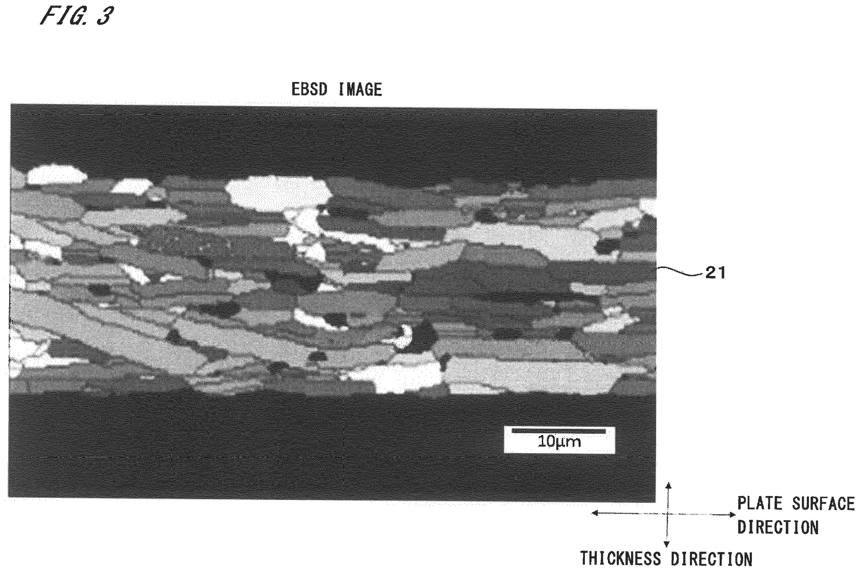

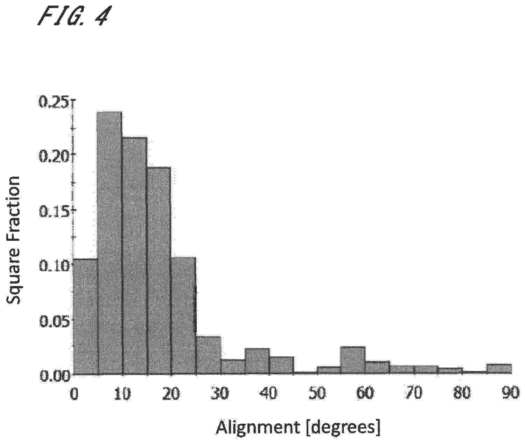

Fig. 2 is a diagram showing one example of a sectional SEM image perpendicular to the plate surface of the oriented positive electrode plate, and Fig. 3 is a diagram showing an electron backscatter diffraction (EBSD) image of a section perpendicular to the plate surface of the oriented positive electrode plate. Fig. 4 is a diagram illustrating a histogram showing the angular distribution of orientation of primary particles 21 in the EBSD image in Fig. 3 on an area basis. Observation of the EBSD image in Fig. 3 shows discontinuities in crystal orientation. In Fig. 3, the orientation angle of each primary particle 21 is expressed by shades of color, and the darker color indicates the smaller orientation angle. The orientation angle as used herein refers to an inclination angle formed by the (003) surface of each primary particle 21 and the plate surface direction. In Figs. 2 and 3, portions that are displayed in black inside the oriented positive electrode plate correspond to pores.

The oriented positive electrode plate is an oriented sintered body of a plurality of primary particles 21 coupled together. Each primary particle 21 primarily has a plate-like shape, but the primary particles 21 may include those of different shapes such as a rectangular parallelepiped shape, a cubic shape, and a spherical shape. There are no particular limitations on the sectional shape of each primary particle 21, and each primary particle 21 may have a rectangular shape, a polygonal shape other than the rectangular shape, a circular shape, an oval shape, or a complex shape other than the aforementioned shapes.

Each primary particle 21 is composed of a lithium composite oxide. The lithium composite oxide is an oxide expressed as LiₓMO₂ (0.05 < x < 1.10, where M is at least one type of transition metal and typically contains at least one of Co, Ni, and Mn). The lithium composite oxide has a layered rock-salt structure. The layered rock-salt structure refers to a crystal structure in which a lithium layer and a layer of transition metal other than lithium are alternately laminated one above the other with a layer of oxygen therebetween, i.e., a crystal structure in which a layer of transition metal ions and a single lithium layer are alternately laminated one above the other via oxide ions (typically, an α-NaFeO₂-type structure, i.e., a structure in which transition metal and lithium are regularly aligned in the [111] axial direction of a cubic rock-salt structure). Examples of the lithium composite oxide include lithium cobaltate (LiₓCoO₂), lithium nickelate (LiₓNiO₂), lithium manganate (LiₓMnO₂), lithium nickel manganate (LiₓNiMnO₂), lithium nickel cobaltate (LiₓNiCoO₂), lithium cobalt nickel manganate (LiₓCoNiMnO₂), and lithium cobalt manganate (LiₓCoMnO₂). In particular, lithium cobaltate (LiₓCoO₂, typically LiCoO₂) is preferable. The lithium composite oxide may contain at least one type of elements selected from the group consisting of Mg, Al, Si, Ca, Ti, V, Cr, Fe, Cu, Zn, Ga, Ge, Sr, Y, Zr, Nb, Mo, Ag, Sn, Sb, Te, Ba, Bi, and W. These elements may be present uniformly within the positive electrode, or may be unevenly distributed on the surface. When present on the surface, the elements may uniformly cover the surface, or may be present in island form. The elements present on the surface are expected to serve to moderate reactions with an electrolytic solution. In this case, the elements are especially preferably Zr, Mg, Ti, or Al.

As illustrated in Figs. 3 and 4, an average value of the orientation angles of the primary particles 21, i.e., an average orientation angle, is greater than 0° and less than or equal to 30°. This brings about various advantages as follows. Firstly, each primary particle 21 lies down in a direction inclined to the thickness direction, and therefore, the adhesion between primary particles can be improved. This results in an improvement in lithium ion conductivity between a given primary particle 21 and other primary particles 21 that are adjacent to the given primary particle 21 on both sides in the longitudinal direction, and accordingly, rate performance can be improved. Secondly, the rate performance can be further improved. This is because since shrinking and swelling of the oriented positive electrode in the thickness direction, which occur during comings and goings of lithium ions, gain superiority over shrinking and swelling in the plate surface direction, the oriented positive electrode plate can shrink and swell smoothly, and following this the comings and goings of lithium ions also become smooth.

The average orientation angle of the primary particles 21 is obtained using the following technique. First, three horizontal lines and three vertical lines are drawn in an EBSD image obtained by observing a 95 µm by 125 µm rectangular region at 1000 magnifications as illustrated in FIG. 3, the three horizontal lines dividing the oriented positive electrode plate into quarters in the thickness direction, and the three vertical lines diving the oriented positive electrode plate into quarters in the plate surface direction. Next, an arithmetic mean of the orientation angles of all primary particles 21 that intersect with at least one of the three horizontal lines and the three vertical lines is calculated to obtain the average orientation angle of the primary particles 21. From the viewpoint of further improving the rate performance, the average orientation angle of the primary particles 21 is preferably less than or equal to 30°, and more preferably less than or equal to 25°. From the viewpoint of further improving the rate performance, the average orientation angle of the primary particles 21 is preferably greater than or equal to 2°, and more preferably greater than or equal to 5°.

As illustrated in Fig. 4, the orientation angles of the primary particles 21 may be widely distributed from 0° to 90°, but it is preferable that most of the orientation angles are distributed in a range greater than 0° and less than or equal to 30°. That is, when a section of the oriented sintered body forming the oriented positive electrode plate is analyzed by EBSD, a total area of primary particles 21 (hereinafter, referred to as "low-angle primary particles") whose orientation angles relative to the plate surface of the oriented positive electrode plate are greater than 0° and less than or equal to 30°among all primary particles 21 included in the section used for analysis is preferably 70% or more, and more preferably 80% or more, of the gross area of the primary particles 21 included in the section (specifically, 30 primary particles 21 used to calculate the average orientation angle). This increases the percentage of primary particles 21 with high mutual adhesion and accordingly further improves the rate performance. A total area of low-angle primary particles whose orientation angles are less than or equal to 20° is preferably 50% or more of the gross area of the 30 primary particles 21, which are used to calculate the average orientation angle. Moreover, a total area of low-angle primary particles whose orientation angles are less than or equal to 10° is more preferably 15% or more of the gross area of the 30 primary particles 21, which are used to calculate the average orientation angle.

Since each primary particle 21 mainly has a plate-like shape, a section of each primary particle 21 extends in a predetermined direction and typically forms a generally rectangular shape as illustrated in Figs. 2 and 3. That is, when a section of the oriented sintered body is analyzed by EBSD, a total area of primary particles 21 whose aspect ratios are greater than or equal to 4 among primary particles 21 included in the section used for analysis is preferably 70% or more, and more preferably 80% or more, of the gross area of the primary particles 21 included in the section (specifically, the 30 primary particles 21 used to calculate the average orientation angle). This further improves mutual adhesion of the primary particles 21 and, as a result, further improves the rate performance. The aspect ratio of each primary particle 21 is a value obtained by dividing the maximum Feret's diameter of the primary particle 21 by the minimum Feret's diameter thereof. In the EBSD image used to observe a section, the maximum Feret's diameter is a maximum distance between two parallel straight lines when the primary particle 21 is sandwiched between these two lines. In the EBSD image, the minimum Feret's diameter is a minimum distance between two parallel straight lines when the primary particle 21 is sandwiched between these two lines.

A plurality of primary particles composing the oriented sintered body preferably have a mean particle diameter greater than or equal to 0.5 µm. Specifically, the 30 primary particles used to calculate the average orientation angle preferably have a mean particle diameter greater than or equal to 0.5 µm, more preferably greater than or equal to 0.7 µm, and yet more preferably greater than or equal to 1.0 µm. This reduces the number of grain boundaries among the primary particles 21 in the direction of conduction of lithium ions and improves lithium ion conductivity as a whole. Thus, the rate performance can be further improved. The mean particle diameter of the primary particles 21 is a value obtained as an arithmetical mean of circle equivalent diameters of the primary particles 21. The circle equivalent diameter refers to the diameter of a circle having the same area as the area of each primary particle 21 in the EBSD image.

The positive electrode 2 (e.g., a lithium composite oxide sintered plate) preferably has a porosity of 20 to 60%, more preferably 25 to 55%, yet more preferably 30 to 50%, and especially preferably 30 to 45%. The presence of pores raises expectations of a stress release effect and an increase in capacity, and in the case of the oriented sintered body, further improves mutual adhesion of the primary particles 21 and accordingly further improves the rate performance. The porosity of the sintered body is calculated by polishing a section of the positive electrode plate with a cross-section (CP) polisher, observing the section at 1000 magnifications with an SEM, and binarizing a resultant SEM image. There are no particular limitations on an average circle equivalent diameter of the pores formed in the oriented sintered body, and the average circle equivalent diameter may preferably be less than or equal to 8 µm. As the average circle equivalent diameter of the pores becomes smaller, mutual adhesion of the primary particles 21 is more improved and, as a result, the rate performance is more improved. The average circle equivalent diameter of pores is a value obtained as an arithmetical mean of circle equivalent diameters of 10 pores in the EBSD image. The circle equivalent diameter as used herein refers to the diameter of a circle having the same area as the area of each pore in the EBSD image. Each pore formed in the oriented sintered body may be an open pore that is connected to the outside of the positive electrode 2, but it is preferable that each pore does not come through the positive electrode 2.

The positive electrode 2 (e.g., a lithium composite oxide sintered plate) preferably has a mean pore diameter of 0.1 to 10.0 µm, more preferably 0.2 to 5.0 µm, and yet more preferably 0.3 to 3.0 µm. If the mean pore diameter is within the aforementioned range, it is possible to suppress the occurrence of stress concentration in local fields of large pores and to easily release stress uniformly in the sintered body.

The positive electrode 2 preferably has a thickness of 60 to 450 µm, more preferably 70 to 350 µm, and yet more preferably 90 to 300 µm. If the thickness is within this range, it is possible to increase the active material capacity per unit area and improve the energy density of the coin-type secondary cell 1 and to suppress degradation of cell characteristics (especially, an increase in resistance value) accompanying the repetition of charging and discharging.

The negative electrode 3 is, for example, a plate-like sintered body. The fact that a sintered body is used as the negative electrode 3 means that the negative electrode 3 contains neither binders nor conductive assistants. This is because even if a green sheet contains a binder, the binder will be destroyed or burnt down during firing. Using a sintered body as the negative electrode 3 allows the negative electrode 3 to ensure heat resistance during reflow soldering. Besides, the negative electrode 3 that includes no binders increases packaging density of the negative active material (e.g., LTO or Nb₂TiO₇, which will be described later) and provides high capacity and favorable charge and discharge efficiency. As described previously, the negative electrode 3 is porous, i.e., has pores.

A preferable negative electrode 3 is a titanium-containing sintered plate. The titanium-containing sintered plate preferably contains lithium titanate Li₄Ti₅O₁₂ (hereinafter, referred to as "LTO") or niobium titanium composite oxide Nb₂TiO₇, and more preferably LTO. Although LTO is typically known to have a spinel structure, a different structure may be employed during charging and discharging. For example, reactions progress while LTO contains both Li₄Ti₅O₁₂ (spinel structure) and Li₇Ti₅O₁₂ (rock-salt structure), i.e., two phases coexist, during charging and discharging. Accordingly, LTO is not limited to having a spinel structure. The LTO sintered plate may be fabricated according to, for example, the method described in Document 4 described above (Japanese Patent Application Laid-Open No. 2015-185337). Although the following description is given of the case where a titanium-containing sintered plate is used as the negative electrode 3, the negative electrode 3 may be an electrode of a different type depending on the design of the coin-type secondary cell 1. One example of such a different negative electrode 3 is a powder dispersed-type negative electrode (so-called coating electrode) produced by applying and drying a negative electrode mixture that includes, for example, a negative active material, a conductive assistant, and a binder.

The aforementioned titanium-containing sintered plate has a structure in which a plurality of (i.e., a large number of) primary particles are coupled together. Accordingly, it is preferable that these primary particles are composed of LTO or Nb₂TiO₇.

The negative electrode 3 preferably has a thickness of 70 to 500 µm, more preferably 85 to 400 µm, and yet more preferably 95 to 350 µm. A thicker LTO sintered plate facilitates implementation of a cell with high capacity and high energy density. The thickness of the negative electrode 3 is obtained by, for example, measuring the distance between the plate surfaces observed generally in parallel, when a section of the negative electrode 3 is observed with a scanning electron microscope (SEM).

A mean particle diameter of the primary particles composing the negative electrode 3, i.e., a primary particle diameter, is preferably less than or equal to 1.2 µm, more preferably in the range of 0.02 to 1.2 µm, and yet more preferably in the range of 0.05 to 0.7 µm. The primary particle diameter within the aforementioned range facilitates achieving both lithium ion conductivity and electron conductivity and contributes to an improvement in rate performance.

The negative electrode 3 has pores. The negative electrode 3 with pores, especially with open pores, allows penetration of the electrolytic solution into the negative electrode 3 when the negative electrode 3 is incorporated in the cell, and as a result, improves lithium ion conductivity. The reason for this is that, among two types of lithium ion conduction in the negative electrode 3, namely, conduction through constituent particles of the negative electrode 3 and conduction through the electrolytic solution in pores, the conduction through the electrolytic solution in pores is predominantly faster than the other.

The negative electrode 3 preferably has a porosity of 20 to 60%, more preferably 30 to 55%, and yet more preferably 35 to 50%. The porosity within the aforementioned range facilitates achieving both lithium ion conductivity and electron conductivity and contributes to an improvement in rate performance.

The negative electrode 3 has a mean pore diameter of, for example, 0.08 to 5.0 µm, preferably 0.1 to 3.0 µm, and more preferably 0.12 to 1.5 µm. The mean pore diameter within the aforementioned range facilitates achieving both lithium ion conductivity and electron conductivity and contributes to an improvement in rate performance.

The separator 41 is preferably a cellulose or ceramic separator. The cellulose separator is advantageous in terms of low cost and excellent heat resistance. The cellulose separator is also widely used. Unlike a polyolefin separator that is inferior in heat resistance, the cellulose separator not only has excellent heat resistance in itself but also has excellent wettability to γ-butyrolactone (GBL) that is a constituent part of the electrolytic solution with excellent heat resistance. Thus, in the case of using an electrolytic solution containing GBL, the separator can be impregnated enough with the electrolytic solution (without rejection). On the other hand, the ceramic separator, of course, has excellent heat resistance and also has the advantage of being able to be fabricated as an integrated sintered body as a whole together with the positive electrode 2 and the negative electrode 3. In the case of the ceramic separator, the ceramic composing the separator is preferably of at least one kind selected from the group consisting of MgO, Al₂O₃, ZrO₂, SiC, Si₃N₄, AlN, and cordierite, and more preferably of at least one kind selected from the group consisting of MgO, Al₂O₃, and ZrO₂. The separator 41 preferably has a thickness of 3 to 50 µm, more preferably 5 to 40 µm, and yet more preferably 10 to 30 µm. The separator 41 preferably has a porosity of 30 to 90%, and more preferably 40 to 80%.

There are no particular limitations on the electrolytic solution 42, and when the coin-type secondary cell 1 is a lithium secondary cell, a commercially available electrolytic solution for lithium cells may be used, such as a solution obtained by dissolving lithium salt in a nonaqueous solvent such as an organic solvent. In particular, an electrolytic solution with excellent heat resistance is preferable, and such an electrolytic solution preferably contains lithium borofluoride (LiBF₄) in the nonaqueous solvent. In this case, a preferable nonaqueous solvent is of at least one kind selected from the group consisting of γ-butyrolactone (GBL), ethylene carbonate (EC), and propylene carbonate (PC), more preferably a mixed solvent containing EC and GBL, a sole solvent containing PC, a mixed solvent containing PC and GBL, or a sole solvent containing GBL, and especially preferably a mixed solvent containing EC and GBL or a sole solvent containing GBL. The boiling point of the nonaqueous solvent can be increased by containing γ-butyrolactone (GBL), and this brings about a significant improvement in heat resistance. From this viewpoint, the volume ratio of EC and GBL in a nonaqueous solvent containing EC and/or GBL is preferably in the range of 0:1 to 1:1 (GBL ratio: 50 to 100 percent by volume), more preferably in the range of 0:1 to 1:1.5 (GBL ratio: 60 to 100 percent by volume), yet more preferably in the range of 0:1 to 1:2 (GBL ratio: 66.6 to 100 percent by volume), and especially preferably in the range of 0:1 to 1:3 (GBL ratio: 75 to 100 percent by volume). Lithium borofluoride (LiBF₄) dissolved in the nonaqueous solvent is an electrolyte with a high decomposition temperature and brings about also a significant improvement in heat resistance. The concentration of LiBF₄ in the electrolytic solution 42 is preferably in the range of 0.5 to 2 mol/l, more preferably in the range of 0.6 to 1.9 mol/l, yet more preferably in the range of 0.7 to 1.7 mol/l, and especially preferably in the range of 0.8 to 1.5 mol/l.

The electrolytic solution 42 may further contain vinylene carbonate (VC) and/or fluoroethylene carbonate (FEC) and/or vinylethylene carbonate (VEC) as (an) additive(s). Both VC and FEC have excellent heat resistance. Accordingly, as a result of the electrolytic solution 42 containing the above additive(s), an SEI film with excellent heat resistance can be formed on the surface of the negative electrode 3.

The cell case 5 in Fig. 1 typically includes a positive electrode can 51, a negative electrode can 52, and a gasket 53. The positive electrode can 51 has the flat plate portion 511 and a peripheral wall portion 512. The flat plate portion 511 has a disk-like shape. The peripheral wall portion 512 protrudes from the outer peripheral edge of the flat plate portion 511. The positive electrode can 51 is a container in which the positive electrode 2 is housed. The negative electrode can 52 has the flat plate portion 521 and a peripheral wall portion 522. The flat plate portion 521 has a disk-like shape. The peripheral wall portion 522 protrudes from the outer peripheral edge of the flat plate portion 521. The negative electrode can 52 is a container in which the negative electrode 3 is housed. In the coin-type secondary cell 1, the negative electrode can 52 is arranged relative to the positive electrode can 51 so that the negative electrode 3 faces the positive electrode 2 with the separator 41 sandwiched therebetween. The positive electrode can 51 and the negative electrode can 52 are made of metal. For example, the positive electrode can 51 and the negative electrode can 52 are formed by press working (drawing) of a metal plate such as a stainless steel or aluminum.

In the coin-type secondary cell 1 in Fig. 1, the peripheral wall portion 512 of the positive electrode can 51 are arranged outward of the peripheral wall portion 522 of the negative electrode can 52. The gasket 53 has insulating properties and is a ring-shaped member provided between the peripheral wall portion 512 and the peripheral wall portion 522. The positive electrode can 51 is fixed to the negative electrode can 52 via the gasket 53 by subjecting the peripheral wall portion 512 arranged on the outer side to plastic deformation, i.e., swaging the peripheral wall portion 512. This forms the aforementioned enclosed space. In the coin-type secondary cell 1, the peripheral wall portion 522 of the negative electrode can 52 may be arranged outward of the peripheral wall portion 512 of the positive electrode can 51. Preferably, the gasket 53 is also filled in spaces, for example, between the peripheral wall portion 522 on the inner side and the positive electrode 2. This reduces the empty space described previously. The gasket 53 is made of, for example, an insulating resin such as polypropylene, polytetrafluoroethylene, polyphenylene sulfide, perfluoroalkoxy alkane, or polychlorotrifluoroethylene. Among the above examples, polyphenylene sulfide or perfluoroalkoxy alkane with excellent heat resistance is more preferable. The gasket 53 may also be a member made of a different insulating material.

The coin-type secondary cell 1 preferably further includes a positive current collector 62 and/or a negative current collector 63. There are no particular limitations on the positive current collector 62 and the negative current collector 63, but they are preferably metal foil such as copper foil or aluminum foil. The positive current collector 62 is preferably arranged between the positive electrode 2 and the positive electrode can 51, and the negative current collector 63 is preferably arranged between the negative electrode 3 and the negative electrode can 52. From the viewpoint of reducing contact resistance, it is preferable that a positive carbon layer 621 is provided between the positive electrode 2 and the positive current collector 62. Similarly, from the viewpoint of reducing contact resistance, it is preferable that a negative carbon layer 631 is provided between the negative electrode 3 and the negative current collector 63. The positive carbon layer 621 and the negative carbon layer 631 are both preferably formed of conductive carbon and may be formed by, for example, applying conductive carbon paste by screen printing or other techniques. As another technique, metal or carbon may be formed by sputtering on the current collecting surfaces of the electrodes. Examples of the metal species include Au, Pt, and Al.

### Method of Fabricating Positive Electrode

A preferable positive electrode 2, i.e., a lithium composite oxide sintered plate, may be fabricated by any method. In one example, the positive electrode 2 is fabricated through (a) production of a lithium composite oxide-containing green sheet, (b) production of an excess lithium source-containing green sheet, the production being conducted as required, and (c) lamination and firing of the green sheet(s).

### (a) Production of Lithium Composite Oxide-Containing Green Sheet

First, raw powder of a lithium composite oxide is prepared. This powder preferably contains synthesized plate-like particles (e.g., plate-like LiCoO₂ particles) having a composition of LiMO₂ (M is as described previously). The D50 particle size on a volume basis for the raw powder is preferably in the range of 0.3 to 30 µm. For example, the method of producing plate-like LiCoO₂ particles is performed as follows. First, LiCoO₂ powder is synthesized by mixing and firing Co₃O₄ raw powder and Li₂CO₃ raw powder (at a temperature of 500 to 900°C for 1 to 20 hours). Resultant LiCoO₂ powder is pulverized in a pot mill into particles with D50 particle size of 0.2 µm to 10 µm on a volume basis, and accordingly plate-like LiCoO₂ particles are obtained, which are capable of conducting lithium ions in parallel with plate surfaces. Such LiCoO₂ particles may also be obtained by techniques for synthesizing plate-like crystals, such as a technique for cracking a green sheet using LiCoO₂ powder slurry after grain growth, a flux method, hydrothermal synthesis, single crystal breeding using a melt, and a sol-gel method. Resultant LiCoO₂ particles are likely to cleave along a cleavage plane. By cracking and cleaving the LiCoO₂ particles, plate-like LiCoO₂ particles are produced.

The aforementioned plate-like particles may be used singly as raw powder, or the aforementioned plate powder and another raw powder (e.g., Co₃O₄ particles) may be mixed together, and resultant mixed powder may be used as raw powder. In the latter case, it is preferable that the plate-like powder is caused to function as template particles that provide orientation, and the other raw powder (e.g., Co₃O₄ particles) is caused to function as matrix particles that are capable of growing along the template particles. In this case, powder obtained by mixing the template particles and the matrix particles in the ratio of 100:0 to 3:97 is preferably used as the raw powder. In the case of using Co₃O₄ raw powder as matrix particles, there are no particular limitations on the D50 particle size of the Co₃O₄ raw powder on a volume basis, and for example, the D50 particle size may be set in the range of 0.1 to 1.0 µm, which is preferably smaller than the D50 particle size of LiCoO₂ template particles on a volume basis. The matrix particles may also be obtained by performing heat treatment on a Co(OH)₂ raw material at a temperature of 500°C to 800°C for 1 to 10 hours. The matrix particles may also use Co(OH)₂ particles, in addition to Co₃O₄, or may use LiCoO₂ particles.

In the case where the raw powder is composed of 100% LiCoO₂ template particles or in the case where LiCoO₂ particles are used as matrix particles, a large-sized (e.g., 90 mm × 90 mm in square) and flat LiCoO₂ sintered plate can be obtained by firing. This mechanism remains uncertain, but it can be expected that the volume is unlikely to change during firing or local variations in volume are unlikely to occur because the firing process does not include synthesis into LiCoO₂.

The raw powder is mixed with a dispersion medium and various additives (e.g., a binder, a plasticizer, and a dispersant) to form slurry. For the purpose of accelerating grain growth or compensating for the amount of volatilization during the firing process, which will be described later, a lithium compound other than LiMO₂ (e.g., lithium carbonate) may be added excessively to the slurry by an amount of approximately 0.5 to 30 mol%. It is preferable that no pore-forming materials are added to the slurry. The slurry is preferably stirred and deaerated under reduced pressure and preferably adjusted to have a viscosity of 4000 to 10000 cP. Resultant slurry is molded into sheet form to obtain a lithium composite oxide-containing green sheet. The green sheet obtained in this way is an independent sheet body. The independent sheet (also referred to as a "self-supported film") as used herein refers to a sheet that is independent of other supports and can be handled separately (including a thin piece with an aspect ratio greater than or equal to 5). That is, the independent sheet does not include such a sheet that is fixedly attached to other supports (e.g., a board) and integrated with the supports (that is impossible or difficult to separate). The sheet molding is preferably performed using a molding technique that enables the application of a shearing force to plate-like particles (e.g., template particles) in the raw powder. This enables an average inclination angle of the primary particles to be kept greater than 0° and less than or equal to 30° relative to the plate surface. As the molding technique that enables the application of a shearing force to the plate-like particles, doctor blading is preferable. The thickness of the lithium composite oxide-containing green sheet may be appropriately set to the desired thickness after firing as described above.

### (b) Production of Excess Lithium Source-Containing Green Sheet (Arbitrary Process)

Besides the above-described lithium composite oxide-containing green sheet, an excess lithium source-containing green sheet is produced as required. This excess lithium source is preferably a lithium compound, other than LiMO₂, whose components other than Li are destroyed by firing. A preferable example of such a lithium compound (excess lithium source) is lithium carbonate. The excess lithium source is preferably in powder form, and the D50 particle size of the excess lithium source powder on a volume basis is preferably in the range of 0.1 to 20 µm, and more preferably in the range of 0.3 to 10 µm. Then, the lithium source powder is mixed with a dispersion medium and various additives (e.g., a binder, a plasticizer, and a dispersant) to form slurry. It is preferable that resultant slurry is stirred and deaerated under reduced pressure and adjusted to have a viscosity of 1000 to 20000 cP. Resultant slurry is molded into sheet form to obtain an excess lithium source-containing green sheet. The green sheet obtained in this way is also an independent sheet-like body. The sheet molding may be performed by any of various known methods, and doctor blading is preferable. The thickness of the excess lithium source-containing green sheet may be preferably set to a thickness that allows the molar ratio (Li/Co ratio) of the Li content in the excess lithium source-containing green sheet to the Co content in the lithium composite oxide-containing green sheet to become preferably higher than or equal to 0.1 and more preferably in the range of 0.1 to 1.1.

### (c) Lamination and Firing of Green Sheet(s)

The lithium composite oxide-containing green sheet (e.g., LiCoO₂ green sheet) and the excess lithium source-containing green sheet (e.g., Li₂CO₃ green sheet) as required are placed in order on a lower setter, and an upper setter is placed thereon. The upper and lower setters are made of ceramic, and preferably made of zirconia or magnesia. When the magnesia setters are used, pores tend to be smaller. The upper setter may have a porous structure or a honeycomb structure, or may have a dense compact structure. If the upper setter is dense and compact, pores in the sintered plate tend to be smaller and the number of pores tends to increase. The excess lithium source-containing green sheet is preferably used as necessary after being cut out into a size that allows the molar ratio (Li/Co ratio) of the Li content in the excess lithium source-containing green sheet to the Co content in the lithium composite oxide-containing green sheet to become preferably higher than or equal to 0.1 and more preferably in the range of 0.1 to 1.1.

At the stage of placement of the lithium composite oxide-containing green sheet (e.g., LiCoO₂ green sheet) on the lower setter, this green sheet may be degreased as required and then calcined at a temperature of 600 to 850°C for 1 to 10 hours. In this case, the excess lithium source-containing green sheet (e.g., Li₂CO₃ green sheet) and the upper setter may be placed in this order on a resultant calcined plate.

Then, the aforementioned green sheet(s) and/or the calcined plate, while sandwiched between the setters, are degreased as required and subjected to heat treatment (firing) at a firing temperature (e.g., 700 to 1000 °C) of a medium temperature range so as to obtain a lithium composite oxide sintered plate. This firing process may be divided into two sub-steps, or may be conducted at once. In the case where firing is performed in two steps, the first firing temperature is preferably lower than the second firing temperature. The sintered plate obtained in this way is also an independent sheet-like plate.

### Method of Fabricating Negative Electrode

A preferable negative electrode 3, i.e., a titanium-containing sintered plate, may be fabricated by any method. For example, an LTO sintered plate is preferably fabricated through (a) production of an LTO-containing green sheet and (b) firing of the LTO-containing green sheet.

### (a) Production of LTO-Containing Green Sheet

First, raw powder (LTO powder) of lithium titanate Li₄Ti₅O₁₂ is prepared. This raw powder may be commercially available LTO powder, or may be newly synthesized powder. For example, the raw powder may be obtained by hydrolysis of a mixture of titanium tetraisopropoxy alcohol and isopropoxy lithium, or may be obtained by firing a mixture that contains, for example, lithium carbonate and titania. The D50 particle size of the raw powder on a volume basis is preferably in the range of 0.05 to 5.0 µm, and more preferably in the range of 0.1 to 2.0 µm. A larger particle size of the raw powder tends to increase pores in size. When the raw material has a large particle size, pulverization processing (e.g., pot milling, bead milling, jet milling) may be performed to obtain a desired particle size. Then, the raw powder is mixed with a dispersion medium and various additives (e.g., a binder, a plasticizer, and a dispersant) to form slurry. For the purpose of accelerating grain growth or compensating for the amount of volatilization during the firing process, which will be described later, a lithium compound (e.g., lithium carbonate) other than LTO may be added excessively to the slurry by an amount of approximately 0.5 to 30 mol%. It is preferable that the slurry is stirred and deaerated under reduced pressure and adjusted to have a viscosity of 4000 to 10000 cP. Resultant slurry is molded into sheet form to obtain an LTO-containing green sheet. The green sheet obtained in this way is an independent sheet-like body. The independent sheet (also referred to as a "self-supported film") as used herein refers to a sheet that is independent of other supports and can be handled separately (including a thin piece with an aspect ratio greater than or equal to 5). That is, the independent sheet does not include such a sheet that is fixedly attached to other supports (e.g., a board) and integrated with the supports (that is impossible or difficult to separate). The sheet molding may be performed by various known methods, and doctor blading is preferable. The thickness of the LTO-containing green sheet may be appropriately set to the desired thickness after firing as described above.

### (b) Firing of LTO-Containing Green Sheet

The LTO-containing green sheet is placed on a setter. The setter is made of ceramic, and preferably made of zirconia or magnesia. The setter preferably has undergone embossing. The green sheet placed on the setter is inserted into a sheath. The sheath is also made of ceramic, and preferably made of alumina. Then, the green sheet in this state is degreased as required and fired so as to obtain an LTO sintered plate. This firing is preferably conducted at a temperature of 600 to 900°C for 0.1 to 50 hours, and more preferably at a temperature of 700 to 800°C for 0.3 to 20 hours. The sintered plate obtained in this way is also an independent sheet-like plate. The rate of temperature rise during firing is preferably in the range of 100 to 1000°C/h, and more preferably in the range of 100 to 600°C/h. In particular, this rate of temperature rise is preferably employed during the process of temperature rise at 300°C to 800°C, and more preferably during the process of temperature rise at 400°C to 800°C.

### (c) Summary

As described above, the LTO sintered plate can be fabricated in a favorable manner. In this preferable fabrication method, 1) adjusting the particle size distribution for the LTO powder and/or 2) changing the rate of temperature rise during firing are effective, and they are considered to contribute to implementation of various characteristics of the LTO sintered plate.

### Circuit Board Assembly

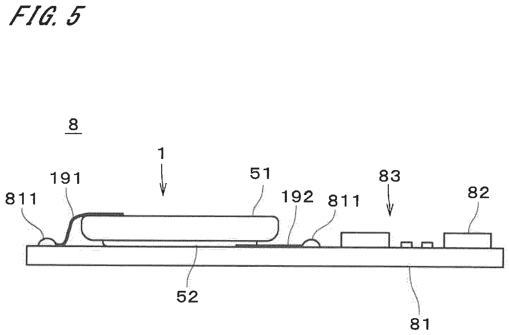

Fig. 5 is a side view of a circuit board assembly 8 that includes the above-described coin-type secondary cell 1. The circuit board assembly 8 further includes a wiring board 81, a wireless communication device 82, and other electronic components 83. The wiring board 81 is a so-called printed circuit board and has conductive wiring on its upper surface. The wiring may be provided inside the wiring board 81 or on the lower surface of the wiring board 81. Although only a single wiring board 81 is illustrated in Fig. 5, the wiring board 81 may have a structure obtained by assembling a plurality of partial wiring boards.

The coin-type secondary cell 1 is fixed to the wiring board 81 in such a posture that the negative electrode can 52 faces the wiring board 81. The positive electrode can 51 of the coin-type secondary cell 1 is electrically connected in advance to a lead 191, and the negative electrode can 52 is electrically connected in advance to a lead 192. End portions of the leads 191 and 192 that are most apart from the coin-type secondary cell 1 are connected with solder 811 to the wiring of the wiring board 81. The connection between the leads 191, 192 and the wiring is established by soldering by reflow method. In other words, the coin-type secondary cell 1 is electrically connected to the wiring board 81 by reflow soldering. The coin-type secondary cell 1 may be fixed to the wiring board 81 in such a posture that the positive electrode can 51 faces the wiring board 81.

The wireless communication device 82 is an electric circuit module including antennas and communication circuits. Terminals of the wireless communication device 82 are connected with solder to the wiring of the wiring board 81. The connection between the wiring and the terminals of the wireless communication device 82 is established by soldering by reflow method. In other words, the wireless communication device 82 is electrically connected to the wiring board 81 by reflow soldering. The wireless communication device 82 is a device that performs communication via radio waves. The wireless communication device 82 may be a device dedicated for transmission, or may be a device capable of both transmission and reception.

The other electronic components 83 mounted on the wiring board 81 appropriately include, for example, a circuit that generates signals to be transmitted, a circuit that processes received signals, sensors, various measuring devices, and terminals that receive input of signals from the outside.

The circuit board assembly 8 is preferably used as part of an IoT device. The term "IoT" is an abbreviation of "Internet of Things," and the "IoT device" as used herein refers to every kind of device that is connected to the Internet and exhibits specific functions.

A process is conventionally performed in which, after a socket is mounted on a wiring board by reflow soldering, a coin-type secondary cell is placed in the socket. In the circuit board assembly 8, the mounting process can be simplified because the coin-type secondary cell 1 is mounted by reflow soldering on the wiring board 81. Preferably, there are no electronic components that are placed on the wiring board 81 after the reflow soldering. This simplifies handling of the circuit board assembly 8 after the reflow soldering. Here, the language "placed after the reflow soldering" as used herein does not include connection of external wiring to the circuit board. More preferably, electrical connection between the wiring of the wiring board 81 and all electronic components connected to the wiring is established by reflow soldering on the wiring board 81. This processing can be implemented by mounting the coin-type secondary cell 1 by reflow soldering on the wiring board 81.

### Examples

Next, examples will be described. Here, coin-type secondary cells according to Examples 1 to 6 and Comparative Examples 1 and 2 shown in Table 1 were produced and evaluated. In the following description, LiCoO₂ is abbreviated as "LCO," and Li₄Ti₅O₁₂ is abbreviated as "LTO."

**Table 1**

| | Volume of Cell Case (cm³) | Sum of Amounts of Voids (cm³) | Amount of Electrolytic Solution (cm³) | Electrolytic Solution to Void Ratio | Cell Case to Electrolytic Solution Ratio | Cell's Initial Performance Value | Ratio of Capacities Before and After Reflow Test |
|---|---|---|---|---|---|---|---|
| Example 1 | 0.065 | 0.02 | 0.0205 | 1.025 | 3.2 | 99% | 90% |
| Example 2 | 0.065 | 0.02 | 0.022 | 1.10 | 3.0 | 100% | 95% |
| Example 3 | 0.065 | 0.02 | 0.025 | 1.25 | 2.6 | 100% | 96% |
| Example 4 | 0.065 | 0.02 | 0.04 | 2.0 | 1.6 | 96% | 94% |
| Example 5 | 0.16 | 0.05 | 0.06 | 1.2 | 2.7 | 100% | 95% |
| Example 6 | 0.024 | 0.011 | 0.015 | 1.4 | 1.6 | 99% | 95% |
| Comparative Example 1 | 0.065 | 0.02 | 0.02 | 1.00 | 3.3 | 90% | 50% |
| Comparative Example 2 | 0.065 | 0.02 | 0.05 | 2.5 | 1.3 | 60% | 92% |

### Example 1

### (1) Production of Positive Electrode

First, Co₃O₄ powder (produced by Seido Chemical Industry Co., Ltd.) and Li₂CO₃ powder (produced by Honjo Chemical Corporation) that were weighed so as to have an Li/Co molar ratio of 1.01 were mixed and then held at 780°C for five hours, and resultant powder was pulverized and cracked in a pot mill so as to have a D50 particle size of 0.4 µm on a volume basis and to obtain powder of LCO plate-like particles. Then, 100 parts by weight of the resultant LCO powder, 100 parts by weight of a dispersion medium (toluene : isopropanol = 1:1), 10 parts by weight of a binder (polyvinyl butyral: Product Number BM-2, produced by Sekisui Chemical Co., Ltd.), 4 parts by weight of a plasticizer (DOP: Di (2-ethylhexyl) phthalate, produced by Kurogane Kasei Co., Ltd.), and 2 parts by weight of a dispersant (Product Name: RHEODOL SP-O30, produced by Kao Corporation) were mixed. A resultant mixture was stirred and deaerated under reduced pressure and adjusted to have a viscosity of 4000 cP so as to prepare LCO slurry. The viscosity was measured by an LVT viscometer manufactured by AMETEK Brookfield, Inc. The slurry prepared in this way was molded into sheet form on a PET film by doctor blading so as to form an LCO green sheet. The thickness of the LCO green sheet after drying was 240 µm.

The LCO green sheet peeled off the PET film was cut out into a piece measuring 50 mm per side and placed on the center of a magnesia setter serving as a lower setter (dimensions: 90 mm per side and a height of 1 mm). On the LCO sheet, a porous magnesia setter serving as an upper setter was placed. The aforementioned LCO sheet, sandwiched between the setters, was placed in an alumina sheath measuring 120 mm per side (produced by Nikkato Corporation). At this time, the alumina sheath was not hermetically sealed, but was covered with a lid with a clearance of 0.5 mm left therebetween. Then, a resultant laminate was degreased for three hours by increasing the temperature up to 600°C at a rate of 200°C/h, and then firing was conducted by increasing the temperature up to 800°C at a rate of 200°C/h and holding the temperature for five hours. After the firing, the temperature was dropped to the room temperature and then a fired body was taken out of the alumina sheath. In this way, an LCO sintered plate with a thickness of 220 µm was obtained. The LCO sintered plate was cut into a circular shape with a diameter of 10 mm by a laser beam machine so as to obtain a positive electrode plate.

### (2) Production of Negative Electrode

First, 100 parts by weight of LTO powder (produced by Ishihara Sangyo Kaisha, Ltd.), 100 parts by weight of a dispersion medium (toluene : isopropanol = 1:1), 20 parts by weight of a binder (polyvinyl butyral: Product Number BM-2, produced by Sekisui Chemical Co., Ltd.), 4 parts by weight of a plasticizer (DOP: Di (2-ethylhexyl) phthalate, produced by Kurogane Kasei Co., Ltd.), and 2 parts by weight of a dispersant (Product Name: RHEODOL SP-O30, produced by Kao Corporation) were mixed. A resultant mixture of the negative raw materials was stirred and deaerated under reduced pressure and adjusted to have a viscosity of 4000 cP so as to prepare LTO slurry. The viscosity was measured by an LVT viscometer produced by AMETEK Brookfield, Inc. The slurry prepared in this way was molded into sheet form on a PET film by doctor blading so as to form an LTO green sheet. The thickness of the LTO green sheet after drying was set to such a value that allowed the LTO green sheet to have a thickness of 250 µm after firing.

A resultant green sheet was cut out into a piece measuring 25 mm per side by a cutting knife and placed on an embossed setter made of zirconia. The green sheet on the setter was inserted into an alumina sheath, held at 500°C for five hours, then increased in temperature at a rate of temperature rise of 200°C/h, and fired at 765°C for one hour. A resultant LTO sintered plate was cut into a circular shape with a diameter of 10.2 mm by a laser beam machine so as to obtain a negative electrode plate.

### (3) Production of Coin-Type Secondary Cell

The coin-type secondary cell 1 as schematically illustrated in Fig. 1 was produced as follows.

### (3a) Adhesion of Negative Electrode Plate to Negative Current Collector with Conductive Carbon Paste

Acetylene black and polyimide-amide were weighted so as to have a mass ratio of 3:1 and mixed together with an appropriate amount of NMP (N-methyl-2-pyrrolidone) serving as a solvent so as to prepare conductive carbon paste. The conductive carbon paste was screen printed on aluminum foil, which serves as a negative current collector. The negative electrode plate produced in (2) above was placed so as to fit in an undried print pattern (i.e., a region coated with conductive carbon paste), and dried under vacuum at 60°C for 30 minutes so as to produce a negative electrode structure in which the negative electrode plate and the negative current collector were bonded together via a carbon layer. Note that the carbon layer had a thickness of 10 µm.

### (3b) Preparation of Positive Current Collector with Carbon Layer

Acetylene black and polyimide-amide were weighed so as to have a mass ratio of 3:1 and mixed together with an appropriate amount of NMP (N-methyl-2-pyrrolidone) serving as a solvent so as to prepare conductive carbon paste. The conductive carbon paste was screen printed on aluminum foil serving as a positive current collector, and then dried under vacuum at 60°C for 30 minutes so as to produce a positive current collector with a carbon layer formed on its surface. Note that the carbon layer had a thickness of 5 µm.

### (3c) Assembly of Coin-Type Secondary Cell

The positive current collector, the carbon layer, the LCO positive electrode plate, the cellulose separator, the LTO negative electrode plate, the carbon layer, and the negative current collector were housed so as to be laminated one above another in this order from the positive electrode can to the negative electrode can between the positive electrode can and the negative electrode can which were to form a cell case (housing), then filled with the electrolytic solution, and sealed by swaging the positive electrode can and the negative electrode can via a gasket. In this way, a coin cell-type lithium secondary cell (coin-type secondary cell 1) with a diameter of 12 mm and a thickness of 1.0 mm was produced. At this time, the electrolytic solution was a solution obtained by dissolving LiBF₄ with a concentration of 1.5 mol/l in an organic solvent obtained by mixing ethylene carbonate (EC) and γ-butyrolactone (GBL) with a volume ratio of 1:3, and was injected by an amount shown in "Amount of Electrolytic Solution" in Table 1.

### (4) Evaluation

### (4a) Measurements of Amounts of Voids and Volume of Cell Case

Before assembly of the coin-type secondary cell, the weights of the positive and negative electrode plates after firing, processed into the aforementioned sizes, and the weight of the separator were measured. Then, the measured weights, volumes, specific gravities were used to calculate the amount of voids in each of the positive electrode plate, the negative electrode plate, and the separator, and a value obtained by adding these amounts of voids were assumed to be "Sum of Amounts of Voids" shown in Table 1. The dimensions of the produced coin-type secondary cell were also measured using a 3D-shape measuring device (VR3200 produced by Keyence Corporation). Then, "Volume of Cell Case" shown in Table 1, excluding the plate thickness of the cell case 5, was calculated. Table 1 further shows a value obtained by dividing "Amount of Electrolytic Solution" by "Sum of Amounts of Voids" as "Electrolytic Solution to Void Ratio" and a value obtained by dividing "Volume of Cell Case" by "Amount of Electrolytic Solution" as "Cell Case to Electrolytic Solution Ratio."

### (4b) Measurement of Ratio of Capacities Before and After Reflow Test

The capacity of the coin-type secondary cell was measured by the following procedure. Specifically, after charged at a constant voltage of 2.7V, the cell was discharged at a discharge rate of 0.2C to measure the initial capacity, and the obtained initial capacity was adopted as an initial cell capacity. Similar measurements were also conducted after a reflow test to measure the cell capacity after the reflow test. The cell capacity after the reflow test was divided by the initial cell capacity so as to calculate "Ratio of Capacities Before and After Reflow Test" shown in Table 1. In the reflow test, the cell was heated at 260°C for 30 seconds, using a reflow device (UNI-5016F produced by ANTOM Co., Ltd.).

### (4c) Calculation of Cell's Initial Performance Value

"Cell's Initial Performance Value" shown in Table 1 was obtained by dividing the aforementioned initial cell capacity by a design capacity of the cell calculated from the weight of the active material.

### Examples 2 to 6

As shown in Table 1, the coin-type secondary cells according to Examples 2 to 6 had different amounts of the electrolytic solution from that of the coin-type secondary cell according to Example 1. The cell cases, the positive electrode plates, and the negative electrode plates in Examples 2 to 4 were the same as those in Example 1. In Example 5 a cell case with a diameter of 20 mm and a thickness of 1.0 mm was used, the positive electrode plate was processed into a circular shape with a diameter of 16.5 mm by laser beam machining, and the negative electrode plate was processed into a circular shape with a diameter of 16.8 mm by laser beam machining. In Example 6, a cell case with a diameter of 6 mm and a thickness of 2.0 mm was used, the positive electrode plate that would have a thickness of 650 µm after firing was processed into a circular shape with a diameter of 4 mm by laser beam machining, and the negative electrode plate that would have a thickness of 780 µm after firing was processed into a circular shape with a diameter of 4.05 mm by laser beam machining. The other parts of the coin-type secondary cells according to Examples 2 to 6 were similar to those of the coin-type secondary cell according to Example 1. The coin-type secondary cells according to Examples 2 to 6 were evaluated in the same manner as the coin-type secondary cell according to Example 1.

### Comparative Examples 1 and 2

The coin-type secondary cells according to Comparative Examples 1 and 2 differ only in the amount of the electrolytic solution from the coil-type secondary cell according to Example 1. Specifically, as shown in Table 1, the amount of the electrolytic solution in Comparative Example 1 was smaller than the amount of the electrolytic solution in Example 1, and the electrolytic-solution-to-void ratio was 1.00. The amount of the electrolytic solution in Comparative Example 2 was greater than the amount of the electrolytic solution in Example 1, and the electrolytic-solution-to-void ratio was 2.5. With the exception of the amount of the electrolytic solution, the coin-type secondary cells according to Comparative Examples 1 and 2 were the same as the coin-type secondary cell according to Example 1. The coin-type secondary cells according to Comparative Examples 1 and 2 were evaluated in the same manner as the coin-type secondary cell according to Example 1.

In the coin-type secondary cell according to Comparative Example 1 whose electrolytic-solution-to-void ratio was 1.00, the ratio of capacities before and after the reflow test was 50% and the cell deteriorated in performance due to the reflow soldering. The coin-type secondary cell according to Comparative Example 2, whose electrolytic-solution-to-void ratio was 2.5, had a cell's initial performance value of 60% and therefore exhibited significantly a lower level of performance than expected. On the other hand, the coin-type secondary cells according to Examples 1 to 6, whose electrolytic-solution-to-void ratios were in the range of 1.025 to 2.4, had ratios of capacities before and after the reflow test higher enough than that in Comparative Example 1 and therefore achieved reduced deterioration of performance induced by reflow soldering. The coin-type secondary cells according to Examples 1 to 6 also had cell's initial performance values higher enough than that in Comparative Example 2 and achieved high performance as expected. In the coin-type secondary cells according to Examples 1 to 6, the cell-case-to-electrolytic-solution ratios were in the range of 1.6 to 3.2. Besides, in any of the coin-type secondary cells according to Examples 1 to 6 and Comparative Examples 1 and 2, the positive electrode plate had a porosity of 20 to 60% and a mean pore diameter of 0.1 to 10.0 µm, and the negative electrode plate had a porosity of 20 to 60% and a mean pore diameter of 0.08 to 5.0 µm.

In the coin-type secondary cells according to Examples 1 to 4, which were different only in the amount of the electrolytic solution, the ratio of capacities before and after the reflow test in Example 1 was lower than those in Examples 2 to 4. Accordingly, in order to further suppress deterioration of performance induced by reflow soldering, it can be said that the electrolytic-solution-to-void ratio is preferably higher than or equal to 1.05, and more preferably higher than or equal to 1.10. The comparison between the coin-type secondary cell according to Example 4 and the coin-type secondary cell according to Comparative Example 2 also shows that, in order to more reliably achieve the coin-type secondary cell 1 with high performance, the electrolytic-solution-to-void ratio is preferably lower than or equal to 2.2, and more preferably lower than or equal to 2.0.

The coin-type secondary cell 1 described above may be modified in various ways.

Although the description of above embodiment was mainly given of the case where the coin-type secondary cell 1 is a lithium secondary cell, the coin-type secondary cell 1 with high performance and reduced deterioration of performance induced by reflow soldering may be a cell other than a lithium secondary cell.

The above-described coin-type secondary cell 1 for soldering by reflow method is particularly suitable for use in an IoT device, but may of course be used in other applications.

The configurations of the above-described preferred embodiments and variations may be appropriately combined as long as there are no mutual inconsistencies.

While the invention has been shown and described in detail, the foregoing description is in all aspects illustrative and not restrictive. It is therefore to be understood that numerous modifications and variations can be devised without departing from the scope of the invention.

### Reference Signs List

- 1: Coin-type secondary cell
- 2: Positive electrode
- 3: Negative electrode
- 5: Cell case
- 41: Separator
- 42: Electrolytic solution

## Claims

1. A coin-type secondary cell for soldering by reflow method, comprising:
a porous positive electrode;
a porous negative electrode;
a porous separator provided between said positive electrode and said negative electrode;
an electrolytic solution with which said positive electrode, said negative electrode, and said separator are impregnated; and
a cell case having an enclosed space in which said positive electrode, said negative electrode, said separator, and said electrolytic solution are housed,
wherein a value obtained by dividing an amount of said electrolytic solution by a sum of amounts of voids in said positive electrode, said negative electrode, and said separator ranges from 1.025 to 2.4.

2. The coin-type secondary cell according to claim 1, wherein
a value obtained by dividing a volume of said cell case by the amount of said electrolytic solution ranges from 1.6 to 3.2.

3. The coin-type secondary cell according to claim 1 or 2, wherein
said coin-type secondary cell has an energy density of 35 to 200 mWh/cm³ before reflow soldering.

4. The coin-type secondary cell according to any one of claims 1 to 3, wherein said positive electrode and said negative electrode are sintered bodies.

5. The coin-type secondary cell according to any one of claims 1 to 4, wherein said positive electrode has a porosity of 20 to 60% and a mean pore diameter of 0.1 to 10.0 µm.

6. The coin-type secondary cell according to any one of claims 1 to 5, wherein said negative electrode has a porosity of 20 to 60% and a mean pore diameter of 0.08 to 5.0 µm.

7. The coin-type secondary cell according to any one of claims 1 to 6, wherein said coin-type secondary cell is a lithium secondary cell, and
said electrolytic solution is a solution that contains lithium borofluoride in a nonaqueous solvent composed of at least one kind selected from the group consisting of γ-butyrolactone, ethylene carbonate, and propylene carbonate.

8. The coin-type secondary cell according to any one of claims 1 to 7, wherein said coin-type secondary cell has a thickness of 0.7 to 1.6 mm and a diameter of 10 to 20 mm.

9. The coin-type secondary cell according to any one of claims 1 to 8, wherein said coin-type secondary cell after reflow soldering has a capacity higher than or equal to 65% of the capacity of said coin-type secondary cell before the reflow soldering.
